# EUROPÄISCHE PATENTSCHRIFT

(11) **EP 2 616 643 B1**
(45) Veröffentlichungstag und Bekanntmachung des Hinweises auf die Patenterteilung: **17.08.2016**
(21) Anmeldenummer: 11752218.5
(22) Anmeldetag: 02.09.2011
(51) Int. Cl.: F01K 23/10, F22G 5/12, F01K 13/02, F22B 1/18

(54) **VERFAHREN ZUR REGELUNG EINER KURZFRISTIGEN LEISTUNGSERHÖHUNG EINER DAMPFTURBINE**
METHOD FOR REGULATING A SHORT-TERM POWER INCREASE OF A STEAM TUBINE
PROCÉDÉ DE RÉGULATION D'UNE AUGMENTATION DE PUISSANCE À COURT TERME D'UNE TURBINE À VAPEUR

(30) Priorität: 13.09.2010 DE 102010040623
(43) Veröffentlichungstag der Anmeldung: 24.07.2013
(73) Patentinhaber: Siemens Aktiengesellschaft, 80333 München (DE)
(72) Erfinder: BRÜCKNER, Jan, 91080 Uttenreuth (DE); THOMAS, Frank, 91056 Erlangen (DE)
(86) Internationale Anmeldenummer: PCT/EP2011/065221
(87) Internationale Veröffentlichungsnummer: WO 2012/034876

(56) Entgegenhaltungen:
- DE-A1- 19 750 125
- FR-A1- 2 401 380
- US-A- 3 260 246
- US-A- 3 850 148
- US-B1- 6 301 895
- US-B1- 6 474 069

## Beschreibung

Die Erfindung betrifft ein Verfahren zur Regelung einer kurzfristigen Leistungserhöhung einer Dampfturbine mit einem vorgeschalteten Abhitzedampferzeuger mit einer Anzahl von einen Strömungsweg bildenden, von einem Strömungsmedium durchströmten Economiser-, Verdampfer- und Überhitzerheizflächen, bei dem in einer Druckstufe Strömungsmedium aus dem Strömungsweg abgezweigt und strömungsmediumsseitig zwischen zwei Überhitzerheizflächen der jeweiligen Druckstufe in den Strömungsweg eingespritzt wird, wobei ein für die Abweichung der Austrittstemperatur der strömungsmediumsseitig letzten Überhitzerheizfläche der jeweiligen Druckstufe von einem vorgegebenen Temperatursollwert charakteristischer erster Kennwert als Regelgröße für die Menge des eingespritzten Strömungsmedium verwendet wird.

Ein Abhitzedampferzeuger ist ein Wärmetauscher, der Wärme aus einem heißen Gasstrom zurückgewinnt. Abhitzedampferzeuger kommen häufig in Gas- und Dampfturbinenanlagen (GuD-Anlagen) zum Einsatz, die überwiegend der Stromerzeugung dienen. Dabei umfasst eine moderne GuD-Anlage üblicherweise ein bis vier Gasturbinen und mindestens eine Dampfturbine, wobei entweder jede Turbine jeweils einen Generator antreibt (Mehrwellenanlage) oder eine Gasturbine mit der Dampfturbine auf einer gemeinsamen Welle einen einzigen Generator antreibt (Einwellenanlage). Die heißen Abgase der Gasturbine werden dabei in dem Abhitzedampferzeuger zur Erzeugung von Wasserdampf verwendet. Der Dampf wird anschließend der Dampfturbine zugeführt. Üblicherweise entfallen ca. zwei Drittel der elektrischen Leistung auf die Gasturbine und ein Drittel auf den Dampfprozess.

Analog zu den verschiedenen Druckstufen einer Dampfturbine umfasst auch der Abhitzedampferzeuger eine Mehrzahl von Druckstufen mit unterschiedlichen thermischen Zuständen des jeweils enthaltenen Wasser-Dampf-Gemisches. In der ersten (Hoch-)Druckstufe durchläuft das Strömungsmedium auf seinem Strömungsweg zunächst Economiser, die Restwärme zur Vorwärmung des Strömungsmediums nutzen, und anschließend verschiedene Stufen von Verdampfer- und Überhitzerheizflächen. Im Verdampfer wird das Strömungsmedium verdampft, danach eventuelle Restnässe in einer Abscheideeinrichtung abgetrennt und der übrig behaltene Dampf im Überhitzer weiter erhitzt. Danach strömt der überhitzte Dampf in den Hochdruckteil der Dampfturbine, wird dort entspannt und der folgenden Druckstufe des Dampferzeugers zugeführt. Dort wird er erneut überhitzt und dem nächsten Druckteil der Dampfturbine zugeführt.

Aufgrund von Lastschwankungen kann die an die Überhitzer übertragene Wärmeleistung stark beeinflusst werden. Daher ist es häufig notwendig, die Überhitzungstemperatur zu regeln. Bei neuen Anlagen wird dies meistens durch eine Einspritzung von Speisewasser zwischen den Überhitzerheizflächen zur Kühlung erreicht, d. h., eine Überströmleitung zweigt vom Hauptstrom des Strömungsmediums ab und führt zu dort entsprechend angeordneten Einspritzventilen. Die Einspritzung wird dabei üblicherweise über einen für die Temperaturabweichungen von einem vorgegebenen Temperatursollwert am Austritt des Überhitzers charakteristischen Kennwert geregelt, so wie aus der FR 2 401 380 A1 bekannt.

Von modernen Kraftwerken werden nicht nur hohe Wirkungsgrade gefordert, sondern auch eine möglichst flexible Betriebsweise. Hierzu gehört außer kurzen Anfahrzeiten und hohen Laständerungsgeschwindigkeiten auch die Möglichkeit, Frequenzstörungen im Stromverbundnetz auszugleichen. Um diese Anforderungen zu erfüllen, muss das Kraftwerk in der Lage sein, Mehrleistungen von beispielsweise 5 % und mehr innerhalb weniger Sekunden zur Verfügung zu stellen.

Dies wird in bisher üblichen GuD-Kraftwerken üblicherweise durch eine Lasterhöhung der Gasturbine realisiert. Unter gewissen Umständen kann es aber insbesondere im oberen Lastbereich möglich sein, dass der gewünschte Leistungsanstieg nicht ausschließlich durch die Gasturbine bereitgestellt werden kann. Daher werden mittlerweile auch Lösungen verfolgt, bei denen die Dampfturbine ebenfalls einen zusätzlichen Beitrag zur Frequenzstützung in den ersten Sekunden leisten kann und soll.

Dies kann beispielsweise durch das Öffnen teilweise angedrosselter Turbinenventile der Dampfturbine oder eines so genannten Stufenventils geschehen, wodurch der Dampfdruck vor der Dampfturbine abgesenkt wird. Dampf aus dem Dampfspeicher des vorgeschalteten Abhitzedampferzeugers wird dadurch ausgespeichert und der Dampfturbine zugeführt. Mit dieser Maßnahme wird innerhalb weniger Sekunden ein Leistungsanstieg im Dampfteil des GuD-Kraftwerks erreicht.

Diese zusätzliche Leistung kann in relativ kurzer Zeit freigesetzt werden, so dass die verzögerte Leistungserhöhung durch die Gasturbine (begrenzt durch deren konstruktions- und betriebsbedingte maximale Laständerungsgeschwindigkeit) zumindest teilweise kompensiert werden kann. Der gesamte Block macht durch diese Maßnahme unmittelbar einen Leistungssprung und kann durch eine nachfolgende Leistungssteigerung der Gasturbine auch dieses Leistungsniveau dauerhaft halten bzw. überschreiten, vorausgesetzt die Anlage befand sich zum Zeitpunkt der zusätzlich angeforderten Leistungsreserven im Teillastbereich.

Eine permanente Androsselung der Turbinenventile zur Vorhaltung einer Reserve führt jedoch immer zu einem Wirkungsgradverlust, so dass für eine wirtschaftliche Fahrweise der Grad der Androsselung so gering wie unbedingt notwendig gehalten werden sollte. Zudem weisen einige Bauformen von Abhitzedampferzeugern, so z. B. Zwangdurchlauf-Dampferzeuger unter Umständen ein erheblich kleineres Speichervolumen auf als z. B. Naturumlauf-Dampferzeuger. Der Unterschied in der Größe des Speichers hat im oben beschriebenen Verfahren Einfluss auf das Verhalten bei Leistungsänderungen des Dampfteils des GuD-Kraftwerks.

Es ist daher Aufgabe der Erfindung, ein Verfahren zur Regelung einer kurzfristigen Leistungserhöhung einer Dampfturbine mit einem vorgeschalteten Abhitzedampferzeuger der oben genannten Art anzugeben, bei dem der Wirkungsgrad des Dampfprozesses nicht über Gebühr beeinträchtigt wird. Gleichzeitig soll die kurzfristige Leistungssteigerung unabhängig von der Bauform des Abhitzedampferzeugers ohne invasive bauliche Modifikationen am Gesamtsystem ermöglicht werden.

Diese Aufgabe wird erfindungsgemäß gelöst, indem zur kurzfristigen Leistungserhöhung der Dampfturbine der Temperatursollwert reduziert und der Kennwert für den Zeitraum der Reduzierung des Temperatursollwerts temporär überproportional zur Abweichung erhöht wird.

Die Erfindung geht dabei von der Überlegung aus, dass zusätzliches Einspritzen von Speisewasser einen weiteren Beitrag zur schnellen Leistungsänderung leisten kann. Durch diese zusätzliche Einspritzung im Bereich der Überhitzer kann nämlich der Dampfmassenstrom temporär erhöht werden. Die Einspritzung wird dabei ausgelöst, indem der Temperatursollwert reduziert wird. Ein Sprung des Temperatursollwerts ist über einen entsprechenden Kennwert mit einem Sprung der Reglerabweichung verknüpft, die den Regler dazu veranlasst, den Öffnungsgrad des Einspritzregelventils zu verändern. Somit kann eine Leistungserhöhung der Dampfturbine genau durch eine derartige Maßnahme, d. h. eine sprunghafte Reduktion des Temperatursollwerts, realisiert werden.

Diese Leistungserhöhung und damit auch der Einspritzmassenstrom sollen jedoch möglichst schnell bereitgestellt werden. Dabei können aber dämpfende Eigenschaften des Regelsystems hinderlich sein, die übermäßig schnelle Änderungen des Einspritzmassenstromes verhindern, was im gewöhnlichen Lastbetrieb auch gewünscht ist, jedoch nicht bei einer schnell bereitzustellenden Leistungserhöhung. Daher sollte die Regelung für den Fall einer kurzfristigen Leistungserhöhung entsprechend angepasst werden. Dies ist in besonders einfacher Weise möglich, in dem das Regelsignal für den Einspritzmassenstrom entsprechend verstärkt wird, und zwar für den Zeitraum der erwünschten kurzfristigen Leistungserhöhung. Dazu wird der für die Abweichung der Austrittstemperatur der strömungsmediumsseitig letzten Überhitzerheizfläche von einem vorgegebenen Temperatursollwert charakteristische Kennwert für den Zeitraum der Reduzierung des Temperatursollwerts temporär überproportional zur Abweichung erhöht.

Im oben beschriebenen Verfahren wird in einem entsprechenden Regelsystem über ein Subtrahierglied ein Soll-Ist-Vergleich zwischen gewünschter und gemessener Dampftemperatur gemacht. Je nach eingesetztem Regelkonzept kann dieses Signal noch durch zusätzliche Information aus dem Prozess weiter modifiziert werden, bevor es im Anschluss als Eingangssignal (Regelabweichung) beispielsweise auf einen PI-Regler aufgeschaltet wird. Vorteilhafterweise kann zusätzlich die Temperatur unmittelbar nach dem Einspritzort des Strömungsmediums, d. h. am Eintritt der letzten Überhitzerheizflächen, als Regelgröße verwendet werden. Bei einer derartigen so genannten Zweikreisregelung werden schlagartige Änderungen des Einspritzmassenstroms, die durch einen Reglereingriff erfolgt sind, abgedämpft. Unter diesen Umständen kann die auf schnelle Eingriffe optimierte Regelung durch Verhinderung eines Überschwingens stabilisiert werden.

Für die Bereitstellung einer Sofortreserve über das Einspritzsystem ist diese dämpfende Wirkung der Zweikreisregelung jedoch eher hinderlich. Daher ist es insbesondere bei der Zweikreisregelung von besonderem Vorteil, die beschriebene verstärkende Anpassung des Kennwerts vorzunehmen. Die dadurch erzeugte regelseitige künstliche Erhöhung der Abweichung der tatsächlichen Temperatur zum vorgegebenen Sollwert erreicht nämlich, dass die anschließende Korrektur durch die Temperatur am Eintritt der letzten Überhitzerheizflächen, d. h. unmittelbar nach dem Einspritzort, bei der Zweikreisregelung verhältnismäßig geringer ausfällt. Dadurch bleibt eine größere Regelabweichung bestehen, die unmittelbar eine stärkere Reglerantwort, d. h. eine größere Erhöhung des Einspritzmassenstroms, zur Folge hat, was in diesem Fall erwünscht ist. Dadurch, dass der Kennwert jedoch nur für den Zeitraum der Reduzierung des Temperatursollwerts temporär überproportional erhöht wird, verschwindet der Einfluss dieser Überhöhung wieder, so dass die über den Sollwert eingestellte Dampftemperatur auch wirklich erreicht werden kann. Somit bleibt der Vorteil der Zweikreisregelung, unzulässige Dampftemperaturabfälle zu vermeiden, nach wie vor bestehen.

In besonders einfacher Weise kann die temporäre Erhöhung des Kennwerts erzeugt werden, indem vorteilhafterweise der für die Abweichung der Temperatur vom Sollwert charakteristische Kennwert aus der Summe dieser Abweichung und einem für die zeitliche Änderung des Temperatursollwerts charakteristischen zweiten Kennwert gebildet wird. Dabei ist in besonders vorteilhafter Ausgestaltung der zweite Kennwert im Wesentlichen die mit einem Verstärkungsfaktor multiplizierte zeitliche Änderung des Temperatursollwerts. Regeltechnisch wird dies realisiert, indem der vorgegebene Dampftemperatursollwert als Eingangssignal eines Differenzierglieds erster Ordnung verwendet wird und der Ausgang dieses Elements nach geeigneter Verstärkung von der Differenz aus gemessener und vorgegebener Temperatur am Heizflächenaustritt subtrahiert wird. Dadurch wird die gewünschte künstliche Erhöhung der Abweichung besonders einfach realisiert und über das zusätzliche Differenzierglied erster Ordnung wird der Einspritzmassenstrom und somit die zusätzlich entbundene Leistung über die Dampfturbine wesentlich schneller erhöht.

Aufgrund des differentiellen Charakters, d. h. die Berücksichtigung nur der zeitlichen Änderung des Sollwerts, nimmt der Einfluss einer derartigen Regelung auf das Gesamtsystem mit fortlaufender Zeit ab (Verschwindimpuls). Das bedeutet, dass das Differenzierglied keinen weiteren Einfluss auf die Regelabweichung hat und die tatsächliche über den Sollwert eingestellte Temperatur auch erreicht wird. Auch für den Fall, dass sich der Sollwert der Dampftemperatur nicht ändert (der Normfall im gewöhnlichen Lastbetrieb) hat eine derartige Ausgestaltung keinen Einfluss auf die restliche Regelstruktur. Somit treten im gewöhnlichen Lastbetrieb keine Unterschiede im Regelverhalten der Dampftemperaturregelung zwischen der Regelstruktur mit bzw. ohne dieses zusätzliche Differenzierglied auf.

In vorteilhafter Ausgestaltung wird ein Parameter eines der Kennwerte anlagenspezifisch bestimmt. Das heißt, die Höhe der Verstärkung, die Parameter des Differenzierglieds etc. sollten spezifisch anhand der im Einzelfall betroffenen Anlage bestimmt werden. Dies kann beispielsweise vorab mit Hilfe von Simulationsrechnungen oder aber während der Inbetriebsetzung der Regelung geschehen.

Bei den heute üblich eingesetzten Abhitzedampferzeugern wird auch strömungsmediumsseitig hinter den Überhitzerheizflächen in den Strömungsweg eingespritzt (Endeinspritzung). Allerdings hat die oben beschriebene Nutzung der zwischen den Überhitzerheizflächen angeordneten Einspritzung (Zwischeneinspritzung) bei der Nutzung zur Bereitstellung einer Leistungsreserve eine höhere Energieausbeute, da nur hier eine zielgerichtete Ausnutzung der thermischen Energie, die in den stromabwärts gelegenen Heizflächen eingespeichert ist, erfolgen kann. Allerdings dauert es systembedingt eine Weile, bis sich die zusätzliche Zwischeneinspritzung in Form von zusätzlicher Leistung an der Dampfturbine bemerkbar macht, da sich erst die gesamte Überhitzerstrecke stromab der Zwischeneinspritzung aufladen muss, bevor ein erhöhter Dampfmassenstrom infolge einer zusätzlichen Einspritzung am Turbineneintritt spürbar wird.

Aus diesem Grund ist es von Vorteil, auch die Endeinspritzung und damit auch die in der Dampfleitungsrohrwand der Frischdampfleitung zur Dampfturbine gespeicherte thermische Energie zu nutzen. Aufgrund der Tatsache, dass die Endeinspritzung direkt am Eintritt in diese Frischdampfleitung angeordnet ist, erfolgt die Reaktion nämlich unmittelbar, d. h., dass bei einer Öffnung des Einspritzregelventils der Endeinspritzung relativ zügig ein höherer Dampfmassenstrom am Turbineneintritt anliegt und somit für einen zügigen Leistungsanstieg sorgt. Dies funktioniert allerdings nur, solange der thermische Speicher der Frischdampfleitung für den vorliegenden Anwendungsfall noch nicht vollständig ausgeschöpft ist, allerdings reicht dieser Speicher erwartungsgemäß solange aus, bis die zusätzlich gewonnene Leistung über die Zwischeneinspritzung zur Geltung kommt. Konkret bedeutet dies, dass die Totzeit oder Reaktionszeit der Zwischeneinspritzung hinsichtlich der Bereitstellung der Sofortreserve wirkungsvoll durch die Einbindung der Endeinspritzung kompensiert werden kann.

Dazu wird auch bei der Endeinspritzung zur kurzfristigen Leistungserhöhung der Dampfturbine der Temperatursollwert reduziert, der auch hier als Regelgröße für die Menge des eingespritzten Strömungsmedium M verwendet wird. Diese Änderung wird allerdings in üblichen Systemen mit einer gewissen Zeitverzögerung aufgeschaltet (regeltechnisch z. B. durch ein PTn-Glied). Diese Zeitverzögerung modelliert das zeitliche Verhalten der Überhitzerstrecke zwischen Zwischen- und Endeinspritzung, d. h., sie ist vorteilhafterweise für die Durchflusszeit des Strömungsmediums M durch die Überhitzerheizflächen und deren thermisches Verhalten zwischen den beiden Einspritzorten charakteristisch. Unter diesen Umständen öffnet zuerst das Zwischeneinspritzregelventil, da dieses zuerst die Änderung des Temperatursollwerts erfährt. Aufgrund der eingebrachten Einspritzmenge reduziert sich mit dem Zeitverhalten der Überhitzerstrecke die Temperatur vor der Endeinspritzung. Somit wird im üblicherweise günstigsten Fall die Endeinspritzung nicht aktiv, was unter bestimmten Umständen im gewöhnlichen Betrieb gewünscht ist. Soll nun aber die Endeinspritzung aufgrund der genannten Vorteile genutzt werden, muss diese unmittelbar nach dem Aufprägen der Sollwertänderung auf den zugeordneten Kennwert aktiv werden. Dazu wird vorteilhafterweise die Zeitverzögerung des Temperatursollwerts bei der Bestimmung des Kennwerts deaktiviert.

Es sollte für diese Maßnahme allerdings gewährleistet sein, dass die Endeinspritzung hinsichtlich der Einspritzqualität optimiert ist, so dass ein feiner Sprühnebel erzeugt wird. Dadurch wird vermieden, dass große Wassertropfen in die Dampfturbine eintreten und diese schädigen können. Bei entsprechend feinem Sprühnebel sind sämtliche Wassertropfen bereits verdampft, sobald sie die Dampfturbine erreichen.

Die mit der Erfindung erzielten Vorteile bestehen insbesondere darin, dass durch die gezielte Reduzierung des Dampftemperatursollwerts unter Verwendung des Einspritzregelverfahrens die in den stromab der Einspritzung gelegenen Metallmassen eingespeicherte thermische Energie für eine temporäre Leistungssteigerung der Dampfturbine genutzt werden kann. Kommen dabei die beschriebenen angepassten Regelverfahren zur Anwendung, sind für den Fall einer schlagartigen Reduzierung des Dampftemperatursollwerts wesentlich schnellere Leistungserhöhungen mit Hilfe des Einspritzsystems realisierbar.

Darüber hinaus ist das Verfahren zur Bereitstellung einer temporären Leistungssteigerung der Dampfturbine unabhängig von anderen Maßnahmen, so dass auch beispielsweise angedrosselte Turbinenventile zusätzlich geöffnet werden können, um die Leistungserhöhung der Dampfturbine noch zu verstärken. Die Wirksamkeit des Verfahrens bleibt durch diese parallelen Maßnahmen zum größten Teil unberührt.

Dabei ist hervorzuheben, dass bei einer fest vorgegebenen Anforderung an zusätzlicher Leistung der Androsselungsgrad der Turbinenventile vermindert werden kann, sollte die Verwendung des Einspritzsystems für die Leistungserhöhung zur Anwendung kommen. Die gewünschte Leistungsentbindung kann unter diesen Umständen dann auch mit geringerer, im günstigsten Fall sogar gänzlich ohne zusätzliche Androsselung erreicht werden. Somit kann die Anlage im gewöhnlichen Lastbetrieb, in der sie für eine Sofortreserve zur Verfügung stehen muss, mit einem vergleichsweise größeren Wirkungsgrad betrieben werden, was auch die betrieblichen Kosten vermindert.

Ein weiterer Vorteil des Verfahrens besteht darin, die tatsächliche Dampftemperatur über das Temperaturregelkonzept kontrolliert absenken zu können. Maximal zulässige Temperaturtransienten der Dampfturbine werden unter diesen Umständen bei maximal möglicher Leistungserhöhung nicht überschritten. Gerade im Hinblick auf den zusätzlichen Einsatz der Endeinspritzung kann die Frischdampftemperatur sehr präzise eingestellt werden.

Letztlich ist das Verfahren auch ohne invasive bauliche Maßnahmen zu realisieren, sondern kann lediglich durch eine Implementierung zusätzlicher Bausteine im Regelsystem umgesetzt werden. Dadurch werden höhere Anlagenflexibilität und -nutzen ohne zusätzliche Kosten erzielt.

Ein Ausführungsbeispiel der Erfindung wird anhand einer Zeichnung näher erläutert. Darin zeigen:
FIG 1 strömungsmediumsseitig schematisch den Hochdruckteil eines Abhitzedampferzeugers mit datenseitiger Verschaltung des Zwischeneinspritzregelsystems zur Nutzung für eine Sofortleistungsentbindung, und
FIG 2 strömungsmediumsseitig schematisch den Hochdruckteil eines Abhitzedampferzeugers mit datenseitiger Verschaltung des Endeinspritzregelsystems zur Nutzung für eine Sofortleistungsentbindung.

Gleiche Teile sind in beiden Figuren mit denselben Bezugszeichen versehen.

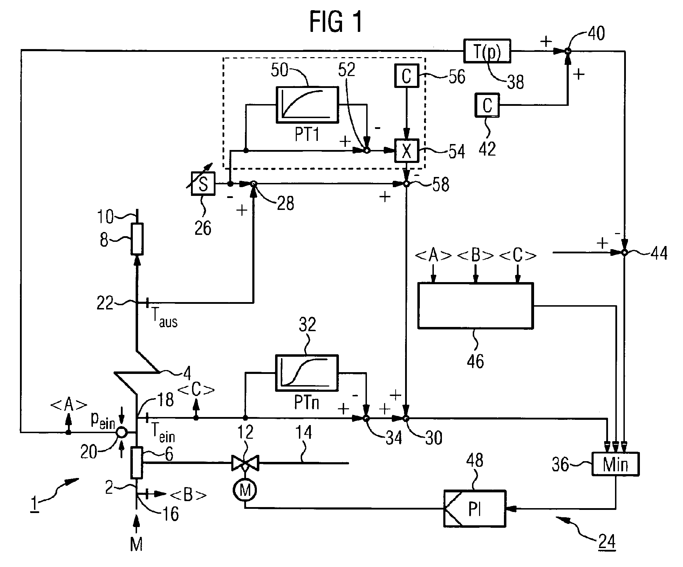

Vom Abhitzedampferzeuger 1 ist in der FIG 1 beispielhaft der Hochdruckteil dargestellt. Die Erfindung kann natürlich auch in anderen Druckstufen zur Regelung der Zwischenüberhitzung zur Anwendung kommen. Die FIG 1 stellt schematisch einen Teil des Strömungswegs 2 des Strömungsmediums M dar. Von den im Hochdruckteil des Abhitzedampferzeugers 1 üblicherweise angeordneten Heizflächen des Economisers, des Verdampfers und des Überhitzers sind nur die letzten Überhitzerheizflächen 4 dargestellt. Die räumliche Anordnung der einzelnen Überhitzerheizflächen 4 im Heißgaskanal ist nicht dargestellt und kann variieren. Die dargestellten Überhitzerheizflächen 4 können jeweils stellvertretend für eine Mehrzahl seriell geschalteter Heizflächen stehen, die jedoch aufgrund der Übersichtlichkeit nicht differenziert dargestellt sind.

Das Strömungsmedium M wird vor dem Eintritt in den in der FIG 1 dargestellten Teil von einer Speisepumpe unter entsprechendem Druck in den Hochdruck-Strömungsweg 2 des Abhitzedampferzeugers 1 gefördert. Dabei durchläuft das Strömungsmedium M zunächst einen Economiser, der eine Vielzahl von Heizflächen umfassen kann. Der Economiser ist typischerweise im kältesten Teil des Heißgaskanals angeordnet, um dort eine Nutzung von Restwärme zur Erhöhung des Wirkungsgrades zu erreichen. Anschließend durchläuft das Strömungsmedium M die Heizflächen des Verdampfers und eines ersten Überhitzers. Zwischen Verdampfer und Überhitzer kann dabei eine Abscheideeinrichtung angeordnet sein, die Restnässe aus dem Strömungsmedium M entfernt, so dass nur noch reiner Dampf in den Überhitzer gelangt.

Nach einer ersten, nicht dargestellten Überhitzerheizfläche ist strömungsmediumsseitig ein Zwischeneinspritzventil 6 angeordnet, ein weiteres Endeinspritzventil 8 ist nach der letzten Überhitzerheizfläche 4 angeordnet. Hier kann kühleres und unverdampftes Strömungsmedium M zur Regelung der Austrittstemperatur am Austritt 10 des Hochdruckteils des Abhitzedampferzeugers 1 eingespritzt werden. Die in das Zwischeneinspritzventil 6 eingebrachte Menge an Strömungsmedium M wird über ein Einspritzregelventil 12 geregelt. Das Strömungsmedium M wird dabei über eine zuvor im Strömungsweg 2 abzweigende Überströmleitung 14 zugeführt. Im Strömungsweg 2 sind weiterhin zur Regelung der Einspritzung mehrere Messeinrichtungen vorgesehen, nämlich eine Temperaturmesseinrichtung 16 vor dem Zwischeneinspritzventil 6, eine Temperaturmesseinrichtung 18 und eine Druckmesseinrichtung 20 nach dem Zwischeneinspritzventil 6 und vor den Überhitzerheizflächen 4, sowie eine Temperaturmesseinrichtung 22 nach den Überhitzerheizflächen 4.

Die übrigen Teile der FIG 1 zeigen das Regelsystem 24 für die Zwischeneinspritzung. Zunächst wird ein Temperatursollwert an einem Sollwertgeber 26 eingestellt. Dieser Temperatursollwert ist zusammen mit der an der Temperaturmesseinrichtung 22 nach den Überhitzerheizflächen 4 auf ein Subtrahierglied 28 geschaltet, wo somit die Abweichung der Temperatur am Austritt der Überhitzerheizflächen 4 vom Sollwert gebildet wird. Diese Abweichung wird in einem Addierglied 30 korrigiert, wobei die Korrektur die Zeitverzögerung einer Temperaturänderung beim Durchlauf durch die Überhitzerheizflächen 4 modelliert. Dazu wird die Temperatur am Eintritt der Überhitzerheizflächen 4 aus der Temperaturmesseinrichtung 18 auf ein zeitverzögerndes PTn-Glied 32 geschaltet. Das sich ergebende Signal wird zusammen mit dem Wert aus der Temperaturmesseinrichtung 18 auf ein Subtrahierglied 34 geschaltet, dessen Ausgang dem Addierglied 30 zugeführt wird. Das Subtrahierglied 34 liefert demnach nur während einer gewissen Zeit nach einer Änderung der Temperatur an der Temperaturmesseinrichtung 18 einen von Null verschiedenen Wert, der die am Addierglied 30 anliegende Abweichung korrigiert.

Das am Addierglied 30 anliegende Signal wird zusammen mit weiteren Signalen auf ein Minimumglied 36 geschaltet, das weitere Parameter berücksichtigt: Einerseits muss die Temperatur hinter der Zwischeneinspritzung einen gewissen Abstand zur druckabhängigen Siedetemperatur haben. Dazu ist der an der Druckmesseinrichtung 20 gemessene Druck in ein Funktionsglied 38 geschaltet, dass die diesem Druck entsprechende Siedetemperatur des Strömungsmediums M ausgibt. In einem Addierglied 40 wird eine voreingestellte Konstante aus einem Geber 42 addiert, die beispielsweise 30 °C betragen kann und einen Sicherheitsabstand zur Siedelinie gewährleistet. Die so ermittelte Mindesttemperatur wird zusammen mit der tatsächlich an der Temperaturmesseinrichtung 18 ermittelten Temperatur auf ein Subtrahierglied 44 geschaltet und die so ermittelte Abweichung an das Minimumglied 36 gegeben. In FIG 1 sind bezüglich der Übersichtlichkeit einige Schaltverbindungen nicht dargestellt sondern durch entsprechende Verbindungszeichen <A>, <B>, <C> angedeutet.

Weiterhin muss nach der Einspritzung eine gewisse Enthalpie des Strömungsmediums M gewährleistet sein, die aus betrieblichen Gründen nicht unterschritten werden sollte. Dazu sind einem dem Minimumglied 36 vorgeschalteten Enthalpiemodul 46 die Signale der Druckmesseinrichtung 20 sowie die der Temperaturmesseinrichtungen 16, 18 vor und nach der Zwischeneinspritzung aufgeschaltet. Das Enthalpiemodul 46 berechnet auf Basis dieser Parameter seinerseits eine zugehörige Temperaturdifferenz, die als Eingangssignal dem folgenden Minimumglied 36 aufgeschaltet wird. Das im Minimumglied 36 ermittelte Signal wird einem PI-Regelglied 48 zur Steuerung des Einspritzregelventils 12 aufgeschaltet.

Um das Einspritzsystem nicht nur zur Regelung der Austrittstemperatur, sondern auch zur Bereitstellung einer sofortigen Leistungsreserve nutzen zu können, umfasst dieses entsprechende Mittel zum Ausführen des Verfahrens zur Regelung einer kurzfristigen Leistungserhöhung einer Dampfturbine. Zunächst wird dazu der Temperatursollwert am Sollwertgeber 26 reduziert, was eine Erhöhung der Zwischeneinspritzmenge zur Folge hat. Damit diese aber unmittelbar zu einer Leistungserhöhung führt, sollte eine schnelle Reglerantwort des PI-Regelglieds 48 gewährleistet sein. Die verursachte Abweichung der tatsächlichen Temperatur vom Temperatursollwert wird jedoch durch das PTn-Glied 32 kurz nach der Änderung abgemildert.

Um dies im Falle einer gewünschten schnellen Leistungserhöhung zu verhindern, ist das Signal des Sollwertgebers 26 für den Temperatursollwert auf ein Differenzierglied erster Ordnung (DT1) geschaltet. Hierfür wird ein PT1-Glied 50 eingangsseitig mit dem Signal des Sollwertgebers 26 beaufschlagt und ausgangsseitig zusammen mit dem ursprünglichen Signal des Sollwertgebers 26 auf ein Subtrahierglied 52 geschaltet, dessen Ausgang mit einem Multiplizierglied 54 verbunden ist, das das Signal um einen Faktor, z. B. 5 aus einem Geber 56 verstärkt. Dieses Signal wird wiederum über ein Subtrahierglied 58 in das Signal zum Addierglied 30 gegeben. Im Falle einer Änderung des Sollwertes erzeugt die Verschaltung über das PT1-Glied 50 ein von Null verschiedenes Signal, dass über das Multiplizierglied 54 verstärkt wird und den für die Abweichung charakteristischen Kennwert künstlich überproportional verstärkt. Das Signal über die Schleife mit dem PTn-Glied 32 ist verhältnismäßig dann kleiner und es wird eine schnellere Reglerantwort des PI-Reglerglieds 48 erzwungen. Somit wird schnell eine Dampfmengenerhöhung erreicht und die Leistung der nachgeschalteten Dampfturbine erhöht.

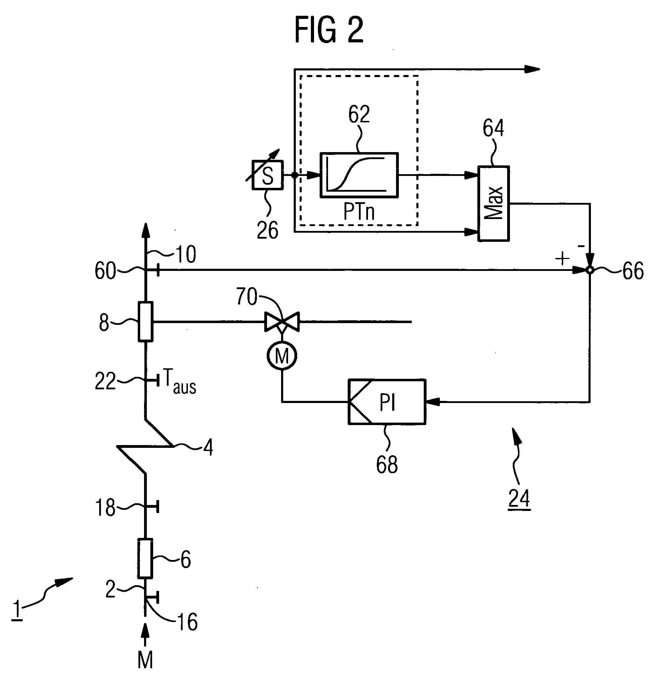

FIG 2 zeigt nun die die Endeinspritzung betreffenden Teile des Regelsystems 24. Hier ist im Strömungsweg 2 nach dem Endeinspritzventil 8 eine weitere Temperaturmesseinrichtung 60. Hier wird ebenfalls der Temperatursollwert des Sollwertgebers 26 als Regelgröße verwendet. Dessen Signal wird auf ein PTn-Glied 62 gegeben, das analog zum PTn-Glied 32 die Zeitverzögerung durch die Überhitzerheizflächen 4 modelliert. Dessen Ausgangssignal wird zusammen mit dem Signal des Sollwertgebers 26 auf ein Maximumglied 64 gegeben, dessen Ausgangssignal zusammen mit dem Signal aus der Temperaturmesseinrichtung 60 in ein Subtrahierglied 66 gegeben wird. Die dort ermittelte Abweichung wird an ein PI-Regelglied 68 gegeben, das das Einspritzregelventil 70 der Endeinspritzung regelt.

Für den Fall einer Änderung des Temperatursollwerts über den Sollwertgeber 26 verzögert das PTn-Glied 62 in Kombination mit dem Maximumglied 64 hier die Reglerantwort des PI-Regelgliedes 68. Um dies für den Fall einer schnell erwünschten Endeinspritzung zu verhindern, wird die Zeitverzögerung, d. h. das PTn-Glied 62, in einem solchen Fall zeitweise deaktiviert. Dadurch wird die Reglerantwort entsprechend beschleunigt und es ist eine schnelle Leistungsentbindung möglich.

Ein derart geregelter Abhitzedampferzeuger 1 kommt nun in einem Gas- und Dampfturbinenkraftwerk zum Einsatz. Hier werden die heißen Abgase einer oder mehrerer Gasturbinen rauchgasseitig durch den Abhitzedampferzeuger 1 geführt, der somit Dampf für eine Dampfturbine bereitstellt. Die Dampfturbine umfasst dabei mehrere Druckstufen, d. h., der vom Hochdruckteil des Abhitzedampferzeugers 1 erhitzte und in der ersten Stufe (Hochdruckstufe) der Dampfturbine entspannte Dampf wird in eine Mitteldruckstufe des Abhitzedampferzeugers 1 geführt und dort erneut überhitzt, allerdings auf niedrigerem Druckniveau. Wie bereits erwähnt, zeigt das Ausführungsbeispiel den Hochdruckteil des Abhitzedampferzeugers 1 zur exemplarischen Verdeutlichung der Erfindung, diese kann jedoch auch in anderen Druckstufen zur Anwendung kommen.

Ein mit einem derartigen Abhitzedampferzeuger ausgestattetes Gas- und Dampfturbinenkraftwerk ist in der Lage, nicht nur über eine kurzfristige Leistungserhöhung der Gasturbine, welche über die erlaubte Maximallaständerungsgeschwindikeit begrenzt ist, sondern auch über eine sofortige Leistungsentbindung der Dampfturbine schnell eine Leistungserhöhung zu leisten, die zur Stützung der Frequenz des Verbundstromnetzes dient.

Dadurch, dass diese Leistungsreserve durch eine Doppelnutzung der Einspritzarmaturen neben der üblichen Temperaturregelung erreicht wird, kann auch eine permanente Androsselung der Dampfturbinenventile zur Bereitstellung einer Reserve verringert werden oder ganz entfallen, wodurch ein besonders hoher Wirkungsgrad während des normalen Betriebs erreicht wird.

## Patentansprüche

1. Verfahren zur Regelung einer kurzfristigen Leistungserhöhung einer Dampfturbine mit einem vorgeschalteten Abhitzedampferzeuger (1) mit einer Anzahl von einen Strömungsweg (2) bildenden, von einem Strömungsmedium (M) durchströmten Economiser-, Verdampfer- und Überhitzerheizflächen (4), bei dem in einer Druckstufe Strömungsmedium (M) aus dem Strömungsweg (2) abgezweigt und strömungsmediumsseitig zwischen zwei Überhitzerheizflächen (4) der jeweiligen Druckstufe in den Strömungsweg eingespritzt wird, wobei ein für die Abweichung der Austrittstemperatur der strömungsmediumsseitig letzten Überhitzerheizfläche der jeweiligen Druckstufe von einem vorgegebenen Temperatursollwert charakteristischer erster Kennwert als Regelgröße für die Menge des eingespritzten Strömungsmedium (M) verwendet wird,
wobei zur kurzfristigen Leistungserhöhung der Dampfturbine der Temperatursollwert reduziert und der Kennwert für den Zeitraum der Reduzierung des Temperatursollwerts temporär überproportional zur Abweichung erhöht wird.

2. Verfahren nach Anspruch 1, bei dem zusätzlich die Temperatur unmittelbar nach dem Einspritzort des Strömungsmediums (M) als Regelgröße für die Menge des eingespritzten Strömungsmediums (M) verwendet wird.

3. Verfahren nach einem der vorhergehenden Ansprüche, bei dem der erste Kennwert aus der Summe der Abweichung und einem für die zeitliche Änderung des Temperatursollwerts charakteristischen zweiten Kennwert gebildet wird.

4. Verfahren nach Anspruch 3, bei dem der zweite Kennwert im Wesentlichen die mit einem Verstärkungsfaktor multiplizierte zeitliche Änderung des Temperatursollwerts ist.

5. Verfahren nach einem der vorhergehenden Ansprüche, bei dem ein Parameter eines der Kennwerte anlagenspezifisch bestimmt wird.

6. Verfahren nach einem der vorhergehenden Ansprüche, bei dem im Abhitzedampferzeuger (1) Strömungsmedium (M) strömungsmediumsseitig hinter den Überhitzerheizflächen (4) in den Strömungsweg (2) eingespritzt wird, wobei der erste Kennwert als Regelgröße für die Menge des eingespritzten Strömungsmedium (M) verwendet wird,
wobei zur kurzfristigen Leistungserhöhung der Dampfturbine der Temperatursollwert reduziert und eine Zeitverzögerung des Temperatursollwerts bei der Bestimmung des ersten Kennwerts deaktiviert wird.

7. Verfahren nach Anspruch 6, bei dem die Zeitverzögerung für die Durchflusszeit des Strömungsmediums (M) durch die Überhitzerheizflächen (4) zwischen den beiden Einspritzorten und/oder deren thermisches Verhalten charakteristisch ist.

## Claims

1. Method for regulating a short-term power increase of the steam turbine with an upstream waste heat steam generator (1) with a number of economiser, evaporator and superheater heating surfaces (4) forming a flow path (2) through which a flow medium (M) flows, in which in a pressure stage flow medium (M) branches off from the flow path (2) and is injected into the flow path between two superheater heating surfaces (4) of the respective pressure stage on the flow medium side, wherein a first characteristic value characteristic of the discrepancy between the outlet temperature of the last superheater heating surface on the flow medium side of the respective pressure stage from a predetermined temperature nominal value is used as a regulation variable for the amount of injected flow medium (M),
wherein, for a short-term increase in power of the steam turbine, the temperature nominal value is reduced and the characteristic value for the period of the reduction of the temperature nominal value is temporarily increased disproportionately to the discrepancy.

2. Method according to claim 1, in which additionally the temperature directly downstream from the injection point of the flow medium (M) is used as a regulation variable for the amount of flow medium (M) injected.

3. Method according to one of the preceding claims, in which the first characteristic value is formed from the sum of the discrepancy and a characteristic second value for the change over time of the temperature nominal value.

4. Method according to claim 3, in which the second characteristic value is essentially the change over time of the temperature nominal value multiplied by an amplification factor.

5. Method according to one of the preceding claims, in which a parameter of one of the characteristic values is determined specifically for the plant.

6. Method according to one of preceding claims in which, in the waste heat steam generator (1), flow medium (M) is injected into the flow path (2) on the flow medium side downstream from the superheater heating surfaces (4), wherein the first characteristic value is used as a regulation variable for the amount of injected flow medium (M),
wherein, for a short-term increase in power of the steam turbine, the temperature nominal value is reduced and a time delay of the temperature nominal value is deactivated in the determination of the first characteristic value.

7. Method according to claim 6, in which the time delay is characteristic for the throughflow time of the flow medium (M) through the superheater heating surfaces (4) between the two injection points and/or their thermal behaviour.

## Revendications

1. Procédé de régulation d'une augmentation de puissance à court terme d'une turbine à vapeur, ayant un générateur de vapeur (1) en amont à récupération de la chaleur perdue ayant un certain nombre de surfaces (4) de chauffe d'économiseur, d'évaporateur et de surchauffeur formant un trajet (2) d'écoulement et parcourues par un fluide (M) en écoulement, dans lequel, dans un étage de pression, on dérive du fluide (M) en écoulement du trajet d'écoulement et, du côté du fluide en écoulement, on l'injecte dans le trajet d'écoulement entre deux surfaces (4) de chauffe de surchauffeur de l'étage de pression respectif, en utilisant, comme grandeur de réglage pour la quantité du fluide (M) en écoulement injecté, une première valeur caractéristique caractérisant l'écart à une valeur de consigne de température donnée à l'avance de la température de sortie de la dernière surface de chauffe de surchauffeur de l'étage de pression respectif du côté du fluide en écoulement,
dans lequel, pour l'augmentation de puissance à court terme de la turbine à vapeur, on réduit la valeur de consigne de température et on augmente temporairement plus que proportionnellement à l'écart la valeur caractéristique pendant la durée de la réduction de la valeur de consigne de la température.

2. Procédé suivant la revendication 1, dans lequel on utilise, comme grandeur de réglage pour la quantité du fluide (M) en écoulement injecté, en plus, la température juste après l'emplacement d'injection du fluide (M) en écoulement.

3. Procédé suivant l'une des revendications précédentes, dans lequel on forme la première valeur caractéristique par la somme de l'écart et d'une deuxième valeur caractéristique caractérisant la variation dans le temps de la valeur de consigne de la température.

4. Procédé suivant la revendication 3, dans lequel la deuxième valeur caractéristique est sensiblement la variation dans le temps de la valeur de consigne de la température multipliée par un facteur d'amplification.

5. Procédé suivant l'une des revendications précédentes, dans lequel on détermine spécifiquement à l'installation un paramètre de l'une des valeurs caractéristiques.

6. Procédé suivant l'une des revendications précédentes, dans lequel on injecte, dans le générateur de vapeur (1) à récupération de la chaleur perdue, du fluide (M) en écoulement du côté du fluide en écoulement derrière, dans le trajet (2) d'écoulement, les surfaces (4) de chauffe de surchauffeur, la première valeur caractéristique étant utilisée comme grandeur de régulation de la quantité du fluide (M) en écoulement injecté,
dans lequel, pour l'augmentation de puissance à court terme de la turbine à vapeur, on réduit la valeur de consigne de la température et on désactive un retard dans le temps de la valeur de consigne de la température lors de la détermination de la première valeur caractéristique.

7. Procédé suivant la revendication 6, dans lequel le retard dans le temps est caractéristique du temps de passage du fluide (M) en écoulement dans les surfaces (4) de chauffe de surchauffeur, entre les deux emplacements d'injection et/ou de leur comportement thermique.
